# EUROPÄISCHE PATENTSCHRIFT

(11) **EP 2 250 089 B1**
(45) Veröffentlichungstag und Bekanntmachung des Hinweises auf die Patenterteilung: **20.02.2013**
(21) Anmeldenummer: 09716282.0
(22) Anmeldetag: 04.03.2009
(51) Int. Cl.: B64D 11/00, B60N 3/00

(54) **FALTTISCH**
FOLDING TABLE
TABLE PLIABLE

(30) Priorität: 04.03.2008 DE 102008012523
(43) Veröffentlichungstag der Anmeldung: 17.11.2010
(73) Patentinhaber: Lufthansa Technik AG, 22335 Hamburg (DE)
(72) Erfinder: MUIRHEAD, Andrew, 22848 Norderstedt (DE)
(74) Vertreter: Glawe, Delfs, Moll
(86) Internationale Anmeldenummer: PCT/EP2009/001532
(87) Internationale Veröffentlichungsnummer: WO 2009/109372

(56) Entgegenhaltungen:
- WO-A-01/92055
- DE-A1- 19 705 754
- DE-U1- 20 016 393

## Beschreibung

Die Erfindung betrifft einen Tisch zur Anbringung an der Wand eines Flugzeugs oder dergleichen, mit einer Tischplatte aus wenigstens zwei relativ zueinander bewegbaren Tischplattensegmenten, wobei
a) wenigstens ein Tischplattensegment auf einer Seite einen Bildschirm auf weist,
b) zwei Tischplattensegmente gegeneinander um wenigstens zwei Achsen verschwenkbar bzw. verdrehbar sind, wobei die erste Achse parallel zu einer Kante eines Tischplattensegements und die zweite Achse im Wesentlichen senkrecht zu der ersten Achse in der Ebene eines Tischplattensegments verläuft.

Klapp- oder Falttische zur Verwendung an Bord von Flugzeugen oder in anderen Verkehrsmitteln sind aus offenkundiger Vorbenutzung bekannt. Sie können in der Regel in eine Staustellung (beispielsweise während Start und Landung) gebracht werden, in der sie beispielsweise gegen die Rückenlehne des Vordersitzes oder gegen eine Kabinenverkleidung oder sonstige Wand geklappt oder beispielsweise in einer Armlehne verstaut werden.

WO 01/92055 A1 offenbart einen Tisch für Fahrzeugsitze, bei dem zwei Tischhälften relativ zueinander wahlweise um zwei Schwenkachsen drehbar sind.

Der Erfindung liegt die Aufgabe zugrunde, einen vielseitig verwendbaren Tisch der eingangs genannten Art zu schaffen.

Der erfindungsgemäße Tisch weist zu diesem Zweck folgendes Merkmal auf:
die beiden Tischplattensegmente weisen zueinander zwei rotatorische Freiheitsgrade auf.

Zunächst seien einige im Rahmen der Erfindung verwendete Begriffe erläutert.

Ein Tisch im Sinne der Erfindung ist eine Einrichtung, die in einem (ausgeklappten) Nutzzustand eine als Unterlage nutzbare Fläche bietet. Der Tisch ist zur Anbringung an der Wand eines Flugzeugs oder dergleichen ausgebildet. Der Begriff "Wand" ist im Rahmen der Erfindung nicht auf herkömmliche Wände beschränkt, sondern umfasst jegliche Einrichtung, die den Tisch in einem Stauzustand ganz oder teilweise aufnehmen kann oder gegen die der Tisch im Stauzustand geklappt werden kann. Es kann sich hier insbesondere um eine fakultativ als Vertiefung ausgebildete Fläche an einer Verkleidung einer Wand der Flugzeugkabine, einem Einrichtungsgegenstand in der Flugzeugkabine wie beispielsweise der Rückenlehne eines Vordersitzes handeln oder einen Stauraum beispielsweise in einer Armlehne eines Sitzes oder dergleichen.

Der Tisch weist wenigstens zwei relativ zueinander bewegbare Tischplattensegmente auf. Der Nutzer des Tisches kann, wie unten noch zu erläutern sein wird, den Tisch auf unterschiedliche Art und Weise nutzen. So können die beiden Tischplattensegmente so zueinander bewegt werden, dass sie gemeinsam fluchtend eine im Wesentlichen ebene Tischfläche bilden; alternativ kann nur eines der beiden Segmente genutzt werden (beispielsweise durch Aufeinanderklappen der beiden Tischplattensegmente) oder beide Segmente auf unterschiedliche Art und Weise. Zu diesem Zweck sind die beiden Tischplattensegmente gegeneinander um wenigstens zwei Achsen verschwenkbar bzw. verdrehbar. Die erste Achse liegt im Wesentlichen parallel zu einer Kante eines Tischplattensegments. Um diese Achse können die beiden Segmente gegeneinander geklappt werden. So ist es beispielsweise möglich, zwei Tischplattensegmente um diese Achse (beispielsweise zur Vorbereitung des Verstauens) aufeinanderzuklappen oder diese auseinanderzuklappen bis zu einer Stellung, in der die beiden Segmente im Wesentlichen in einer Ebene liegen und eine gemeinsame Tischfläche bilden können. Die zweite Achse ist im Wesentlichen senkrecht zu der ersten Achse in der Ebene eines Tischplattensegments angeordnet. Sie verleiht den beiden Tischplattensegmenten zueinander einen zweiten rotatorischen Freiheitsgrad. Dieser Freiheitsgrad ermöglicht es, die zweite Tischplatte in eine Vielzahl von unterschiedlichen Positionen relativ zur ersten Tischplatte zu bringen.

Von besonderer Bedeutung ist dies im Zusammenhang mit dem erfindungsgemäßen vorgesehenen Bildschirm auf einer Seite wenigstens eines Tischplattensegments. Der Bildschirm kann bevorzugt auf einer Seite des zweiten Tischplattensegments angebracht werden. Die freie Verdrehbarkeit dieses zweiten Tischplattensegments ermöglicht es dann, das erste Tischplattensegment in eine im Wesentlichen horizontale Nutzstellung zu bringen (in der es als Tisch genutzt werden kann) und den Bildschirm des zweiten Tischplattensegments in eine zum Betrachten des Bildschirms bequeme Nutzposition zu bringen, in der auf dem Bildschirm beispielsweise Filme betrachtet werden können. Alternativ ist es möglich, die beiden Tischplattensegmente so aufeinanderzuklappen, dass lediglich die Bildschirmseite des zweiten Tischplattensegments in Richtung des Benutzers weist. In dieser Stellung kann beispielsweise bei einer Ausbildung des Bildschirms als sogenannter Touch Screen mit Bildschirmintsalten gearbeitet werden, beispielsweise Emails verfasst werden oder dergleichen. Denkbar ist ebenfalls eine Anordnung der beiden Tischplattensegmente so zueinander, dass sie im Wesentlichen in einer Ebene liegen und fluchten, dass jedoch beim zweiten Tischplattensegment der Bildschirm nach oben weist. In dieser Stellung kann ebenfalls auf dem Bildschirm gearbeitet und auf der Fläche des ersten Tischplattensegments Dokumente angeordnet werden.

Bevorzugt ist es, wenn ein erstes Tischplattensegment beweglich an der Wand oder der sonstigen Halte- bzw. Staueinrichtung für den Tisch angeordnet bzw. befestigbar ist und ein zweites Tischplattensegment beweglich mit dem ersten Tischplattensegment verbunden ist. Durch Bewegen des ersten Tischplattensegments relativ zur Wand oder sonstigen Halteeinrichtungen kann dann der gesamte Tisch (erstes, zweites und ggf. weitere Tischplattensegmente gemeinsam) in eine gewünschte Position gebracht werden, anschließend kann bei Bedarf das zweite Tischplattensegment noch relativ zum ersten Tischplattensegment eingestellt werden, beispielsweise der Bildschirm in einen gewünschten Betrachtungswinkel gebracht werden.

Die Einrichtung zur Befestigung des ersten Tischplattensegments an einer Wand oder sonstigen Halter- oder Staueinrichtungen für den Tisch ist vorzugsweise so ausgebildet, dass sie wenigstens einen rotatorischen Freiheitsgrad umfasst. Bevorzugt ist das erste Tischplattensegment (ggf. gemeinsam mit dem zweiten Tischplattensegment) um eine erste Achse verschwenkbar, die im Wesentlichen parallel zu der der Wand oder sonstigen Halteeinrichtung zugewandten Kante des ersten Tischplattensegments verläuft. Mittels dieses rotatorischen Freiheitsgrades kann der Tisch beispielsweise von einer Wand oder der Rücklehne eines Vordersitzes abgeklappt werden.

Bei einer weiteren Variante der Erfindung ist das erste Tischplattensegment gegenüber der Wand zusätzlich um eine zweite Achse verdrehbar, die im Wesentlichen senkrecht zu der ersten Achse in der Ebene des ersten Tischplattensegments verläuft. Gemäß dieser Variante besitzt somit das erste Tischplattensegment gegenüber der Wand einen zusätzlichen rotatorischen Freiheitsgrad. Dieser zusätzliche Freiheitsgrad ist beispielsweise dann von Vorteil, wenn der Tisch lediglich als Bildschirm benutzt werden soll. Zu diesem Zweck können die beiden Tischplattensegmente so aufeinandergeklappt werden, dass der Bildschirm des zweiten Tischplattensegments nach außen weist. Durch Schwenken und Verdrehen des ersten Tischplattensegments gemeinsam mit dem darauf aufgeklappten zweiten Tischplattensegment kann dann der Bildschirm auf jeden gewünschten Betrachtungswinkel eingestellt werden.

Bei den Verbindungseinrichtungen zwischen Wand und erstem Tischplattensegment einerseits und ersten und zweiten Tischplattensegment andererseits kann es sich beispielsweise um ein 3D-Gelenk, ein Kugelgelenk oder dergleichen handeln. Auch möglich ist es beispielsweise, dass erstes und zweites Tischplattensegment beispielsweise über ein mittig an ihrer Verbindungskante angeordnetes Scharnier miteinander verbunden sind, wobei dann beispielsweise das zweite Tischplattensegment zusätzlich auf eine Achse des Scharniers senkrecht zu der vorstehend geschilderten Scharnierachse verdrehbar ist.

Es ist im Rahmen der Erfindung möglich, dass das erste Tischplattensegment in einer oder mehrerer definierten Nutzstellungen relativ zur Wand fixierbar ist. Eine solche Nutzstellung kann beispielsweise eine im Wesentlichen waagerechte Anordnung sein, die den Tisch beispielsweise zur Einnahme von Mahlzeiten nutzbar macht. Andere definierte Nutzstellungen können beispielsweise typische Betrachtungsstellungen für den Bildschirm umfassen. Die Fixierung in solchen Nutzstellungen kann entweder über geeignete Verriegelungseinrichtungen erfolgen, alternativ ist es möglich, dass die genannten Gelenk- oder Scharnierverbindungen Raststellungen bei bestimmten Winkelstellungen aufweisen, aus denen das Tischplattensegment nur gegen einen größeren Widerstand heraus bewegt werden kann.

Es ist ferner bevorzugt, dass das zweite Tischplattensegment in einer oder mehrerer definierten Nutzstellungen relativ zum ersten Tischplattensegment fixiert werden kann. Eine solche Nutzstellung kann beispielsweise eine fluchtende Anordnung der beiden Tischplattensegmente in einer Ebene der Gestalt sein, dass der Bildschirm des zweiten Tischplattensegments nach unten weist und die gesamte Fläche des ersten und zweiten Tischplattensegments gemeinsam als Tisch nutzbar sind. Andere definierte Nutzstellungen können wieder bevorzugte Betrachtungs- oder Arbeitsstellungen für den Bildschirm auf der anderen Seite des zweiten Tischplattensegments sein.

Es ist somit bevorzugt, dass das zweite Tischplattensegment auf einer Seite oder Hauptfläche eine Tischfläche und auf der gegenüberliegenden Seite einen Bildschirm aufweist. Die Tischfläche ist mit einer üblichen Oberfläche wie beispielsweise einem Holzfurnier, einer Laminatbeschichtung oder dergleichen versehen. Die gegenüberliegende Seite weist einen Flachbildschirm wie beispielsweise ein LCD-Display oder dergleichen auf.

Der Bildschirm nimmt bevorzugt einen erheblichen Teil der Gesamtfläche der gegenüberliegenden Seite des zweiten Tischplattensegments ein, bevorzugte Mindestwerte sind 50%, 60%, 70%, 80% und 90% der Gesamtfläche der entsprechenden Seite des zweiten Tischplattensegments. Es ist bevorzugt, dass der Bildschirm im Wesentlichen die gesamte Fläche der entsprechenden Seite des zweiten Tischplattensegments einnimmt, wobei an den Rändern entsprechende Griff- oder ggf. Betätigungseinrichtungen für das Bewegen des zweiten Tischplattensegments und/oder zum Steuern von Bildschirminhalten vorgesehen sein können.

Der Bildschirm kann berührungsempfindliche Steuerelemente aufweisen. Es kann sich beispielsweise um einen im Stand der Technik grundsätzlich bekannten Touch Screen oder einen mit mehreren Fingern bedienbaren sog. Multitouchscreen handeln. Mit diesen Steuerelementen kann beispielsweise Kommunikations- und/oder Entertainmentsoftware bedient werden.

Es kann ein Orientierungssensor vorgesehen sein, der eine automatische Anpassung der Ausrichtung der Bildschirmdarstellung abhängig von der Orientierung des Bildschirms im Raum ermöglicht. Die freie Verschwenkbarkeit des Tischplattensegments mit dem Bildschirm ermöglicht verschiedene Ausrichtungen im Raum. Bei einer bevorzugten Ausgestaltung kann der Bildschirm beispielsweise rechteckig sein, wobei das Rechteck unterschiedliche Seitenlängen hat. Beispielsweise kann der Bildschirm eines der gebräuchlichen Seitenverhältnisse 4:3, 3:2 oder 16:9 aufweisen. Der Orientierungssensor kann dann dafür sorgen, dass bei jeder gewählten Stellung des Bildschirms im Raum (beispielsweise Quer- oder Hochformat) die Bildschirmdarstellung automatisch aufrecht orientiert wird. Auf diese Weise kann ein Benutzer beispielsweise den Bildschirm zum Betrachten von Filmen in das Querformat drehen und zum Lesen von Texten in das Hochformat. Die Bildschirmdarstellung passt sich automatisch an.

Gegenstand der Erfindung ist ferner eine Anordnung aus einer Wand und einem erfindungsgemäßen Tisch. Der Begriff Wand bezeichnet hier wieder sämtliche möglichen Halteeinrichtungen und/oder Flächen, an denen oder in denen ein Tisch im Stauzustand gehaltert werden kann. Bei der Anordnung kann der Tisch in eine Staustellung bringbar sein, in der er im Wesentlichen parallel zu einer Wandfläche angeordnet ist. Beispielsweise kann er gegen die Rückenlehne eines Vordersitzes oder gegen eine dafür vorgesehene Fläche einer Kabinenwand bzw. Kabinenverkleidung oder eines entsprechenden Kabinenmobiliars klappbar sein. Er kann in dieser Staustellung in einer zu diesem Zweck vorgesehenen Vertiefung angeordnet sein, die vorzugsweise an die Tiefe (Bauhöhe) des Tisches in der Staustellung angepasst sein kann.

Die Tischplattensegmente des Tisches können in der Staustellung bevorzugt aufeinandergeklappt und im Wesentlichen parallel zueinander angeordnet sein. Auf diese Weise minimiert sich die erforderliche Fläche bzw. Baugröße der Einrichtung zum Verstauen des Tisches.

Der Bildschirm kann in der Staustellung von der Wand weg weisen und somit für einen Benutzer sichtbar sein. Auf diese Weise ist es möglich, den Bildschirm auch in der Staustellung des Tisches zu benutzen. Beispielsweise können vor oder während des Starts oder des Landeanflugs Flug- und/oder Sicherheitsinformationen über den Bildschirm ausgegeben werden. Ein Ausführungsbeispiel wird im folgenden anhand der Zeichnungen beschrieben. Darin zeigen:
- Figur 1:: schematisch eine erfindungsgemäße Anordnung mit dem Tisch im Stauzustand;
- Figur 2:: eine teilgeschnittene Ansicht von oben auf den Tisch im Stauzustand;

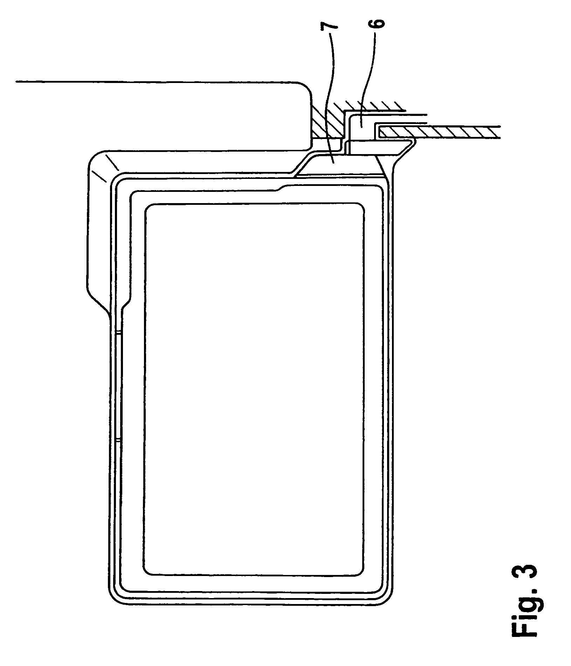

- Figur 3:: eine Ansicht des Tischs im Stauzustand;
- Figur 4 bis 6:: den Tisch in unterschiedlichen Nutzzuständen.

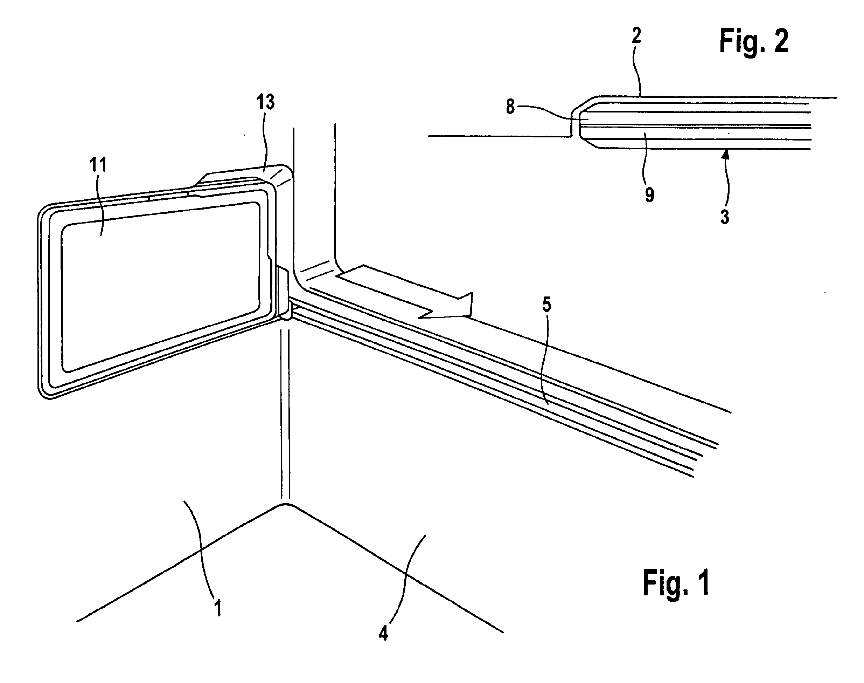

Figur 1 zeigt schematisch eine Teilansicht einer sogenannten Private Cabin für die First Class eines kommerziellen Verkehrsflugzeugs. Eine solche Private Cabin ist in der Regel durch halbhohe Wände in Sitzrichtung nach vorne und hinten, ggf. auch zu einer Seite vom Rest der Flugzeugkabine abgetrennt.

In der Vorderwand 1 dieser Private Cabin befindet sich eine Vertiefung oder Mulde 2 (siehe Figur 2) die zur Aufnahme eines insgesamt mit 3 bezeichneten erfindungsgemäßen Tisches ausgebildet ist.

In der Seitenwand 4 der Private Cabin ist eine Führungsschiene 5 angeordnet. In der Führungsschiene 5 gleitet ein Führungsschlitten 6, der mittels des Gelenks 7 die erste Tischplatte 8 des Tisches 3 haltert. Die erste Tischplatte 8 und die zweite Tischplatte 9 sind mittels eines 3D-Gelenks 10 miteinander verbunden. Die zweite Tischplatte 9 weist auf der im Stauzustand zum Benutzer weisenden Seite einen berührungsempfindlichen Bildschirm (Touch Screen) 11 auf.

Jedes Tischplattensegment hat bei dieser Ausführungsform eine Abmessung von 42x30 cm, selbstverständlich sind andere Abmessungen möglich.

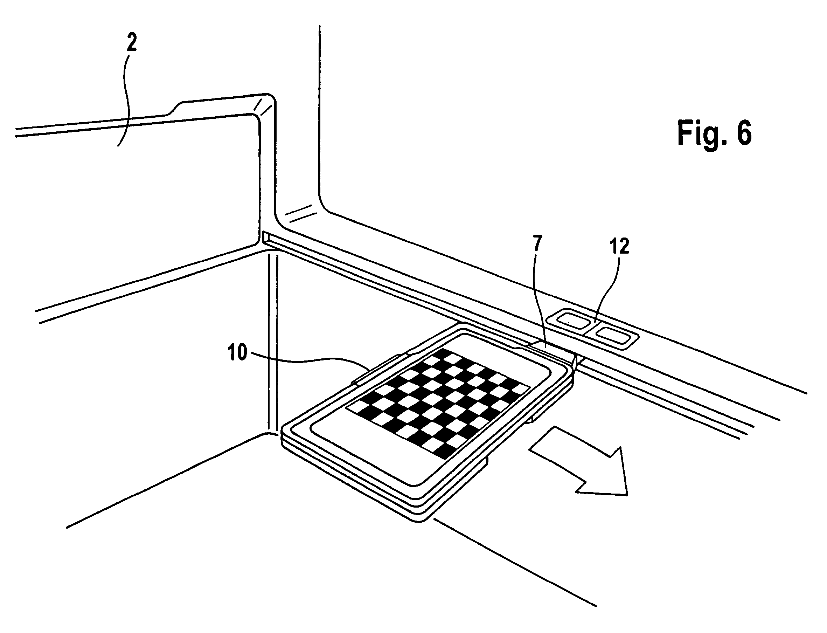

In Figur 1 erkennt man, dass der erfindungsgemäße Tisch im Stauzustand, in der er in der Mulde 2 angeordnet ist, als in der Vorderwand 1 der Private Cabin eingelassener Bildschirm für den Passagier dienen kann. Zum Steuern der Bildschirminhalte können beispielsweise in der Seitenwand 4 der Private Cabin bei 12 (siehe Figur 6) in Griffweite eines sitzenden Passagiers angeordnete Bedienungselemente vorgesehen sein, dabei kann es sich entweder um fest angeordnete Bedienungselemente handeln oder um eine Aufnahme für eine Fernbedienung und ggf. weitere Einrichtungen wie beispielsweise einen portablen Audio- und/oder Videoplayer des Passagiers.

Der in der Staustellung befindliche Tisch 3 ragt, wie in Figur 2 zu erkennen, etwas aus der Mulde 2 heraus und kann daher an den Rändern ergriffen und herausgezogen werden. Eine Griffmulde 13 am Rand der Vertiefung oder Mulde 2 erleichtert dieses Ergreifen und Herausziehen. Es kann vorgesehen sein, dass zunächst eine in der Zeichnung nicht dargestellte Verriegelung gelöst werden muss, um den Tisch 3 aus seiner Staustellung herauszuziehen.

Beim Herausziehen gleitet der Führungsschlitten 6 in der Führungsschiene 5. Der Tisch kann in eine beliebige Stellung in der Führungsschiene 5 gebracht werden.

Mittels des Gelenks 7 kann der Tisch dann in eine gewünschte Winkelstellung gebracht werden, beispielsweise aus der senkrechten Stellung um 90° nach vorne in die in Figur 6 gezeigte horizontale Stellung geschwenkt werden.

Im Rahmen der Erfindung ist es möglich, dass es sich bei dem Gelenk 7 um ein 3D-Gelenk mit mehr als einem Rotationsfreiheitsgrad handelt. Es ist auch möglich, dass dieses Gelenk 7 lediglich einen Rotationsfreiheitsgrad aufweist und es somit lediglich ermöglicht, den Tisch 3 um die horizontal verlaufende Drehachse dieses Gelenks 7 aus der senkrechten Staustellung (Figur 1) in eine wagerechte Nutzstellung (Figur 6) zu schwenken.

In der in Figur 6 gezeigten Nutzstellung weist der Bildschirm 11 des Tisches nach oben und ermöglicht beispielsweise eine Nutzung des Bildschirms zum Arbeiten, beispielsweise zum Bearbeiten von Texten, Emails oder dergleichen. Der Bildschirm kann ferner eine Spielfläche darstellen, beispielsweise für ein Schachspiel gegen einen in der Zeichnung nicht dargestellten Computer. Das Verschieben der Spielfiguren kann durch den berührungsempfindlichen Bildschirm erfolgen.

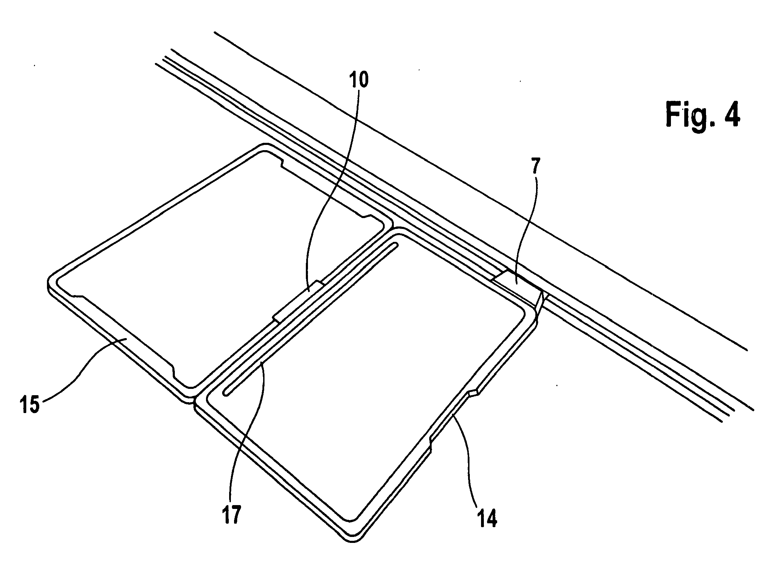

Figur 4 zeigt einen Nutzzustand, bei dem ausgehend von dem Zustand der Figur 6 das Tischplattensegment 9 gegenüber dem Tischplattensegment 8 um eine erste Achse des Gelenks 10 (diese Drehachse verläuft parallel zu den aufeinanderzuweisenden Kanten der Tischplattensegmente 8 und 9) umgeklappt worden ist. Wie in Figur 4 zu erkennen ist, bilden in diesem Nutzzustand die beiden Tischplattensegmente 8 und 9 eine horizontale Nutzfläche oder Tischfläche mit großer nutzbarer Oberfläche. Die in diesem Nutzzustand nach oben weisende Fläche der Tischplattensegmente kann beispielsweise mit einem Holzfurnier, einer Laminatbeschichtung oder einer anderen geeigneten Oberflächenbeschichtung versehen sein. Zweckmäßigerweise ist eine in der Zeichnung nicht dargestellte Rast- oder Verriegelungseinrichtung vorgesehen, die die beiden Tischplattensegmente 8, 9 in dieser Nutzstellung gegeneinander fixiert bzw. ein Verdrehen gegeneinander nur mit größerem Kraftaufwand ermöglicht. Eine Griffmulde 14 erlaubt ein einfaches Verschieben des Tisches in der Führungsschiene 5 und/oder ein Ändern der Winkelstellung. Eine Rahmenverbreiterung 15 an dem zweiten Tischplattensegment 9 erleichtert das Bewegen dieses zweiten Tischplattensegments 9 relativ zum ersten Tischplattensegment 8.

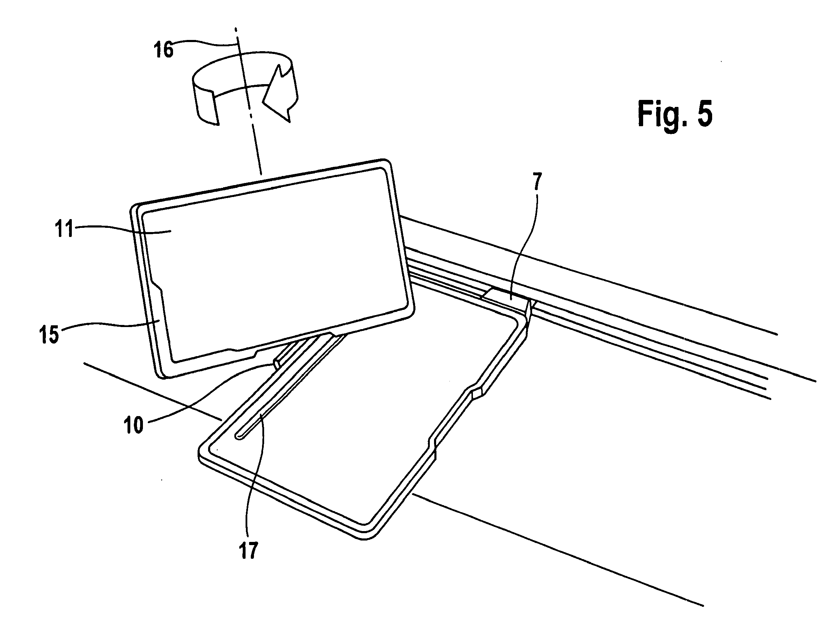

Figur 5 zeigt eine weitere Nutzstellung des erfindungsgemäßen Tisches. Das zweite Tischplattensegment 9 ist aus der in Figur 4 gezeigten horizontalen Stellung nach oben geklappt worden, anschließend ist das zweite Tischplattensegment 9 um die zweite Achse des 3D-Gelenks 10 (angedeutet bei 16 in Figur 5) gedreht worden, so dass jetzt der Bildschirm 11 in Richtung auf den Passagier weist. In dieser Stellung kann das erste Tischplattensegment 8 als Tischfläche genutzt werden und gleichzeitig das zweite Tischplattensegment 9 als Display oder Bildschirm.

In dem ersten Tischplattensegment 8 können eine oder mehrere bei 17 angedeutete Schienen vorgesehen sein, die den Rand des jeweiligen Tischplattensegments sichern, beispielsweise Zeitschriften gegen Herunterrutschen sichern können. Diese Schienen 17 können vorzugsweise in der entsprechenden Tischplattensegmentfläche versenkbar sein, damit sie ein flaches Gegeneinanderklappen der beiden Tischplattensegmente 8, 9 nicht behindern.

## Patentansprüche

1. Tisch zur Anbringung an der Wand (1) eines Flugzeugs oder dergleichen, mit einer Tischplatte aus wenigstens zwei relativ zueinander bewegbaren Tischplattensegmenten (8, 9), wobei :
a) wenigstens ein Tischplattensegment (9) auf einer Seite einen Bildschirm (11) auf weist;
b) zwei Tischplattensegmente (8, 9) gegeneinander um wenigstens zwei Achse verschwenkbar bzw. verdrehbar sind, wobei die erste Achse parallel zu einer Kante eines Tischplattensegements (8, 9) und die zweite Achse im Wesentlichen senkrecht zu der ersten Achse in der Ebene eines Tischplattensegments (9) verläuft; **dadurch gekennzeichnet, dass** die beiden Tischplattensegmente zueinander zwei rotatorische Freiheitsgrade aufweisen.

2. Tisch nach Anspruch 1, **dadurch gekennzeichnet, dass** ein erstes Tischplattensegment (8) beweglich an der Wand (1) befestigbar ist und ein zweites Tischplattensegment (9) beweglich mit dem ersten Tischplattensegment (8) verbunden ist.

3. Tisch nach Anspruch 2, **dadurch gekennzeichnet, dass** das erste Tischplattensegment (8) gegenüber der Wand (1) um eine erste Achse verschwenkbar ist, die parallel zu der der Wand (1) zugewandten Kante des ersten Tischplattensegements (8) verläuft.

4. Tisch nach Anspruch 3, **dadurch gekennzeichnet, dass** das erste Tischplattensegment (8) gegenüber der Wand (1) zusätzlich um eine zweite Achse verdrehbar ist, die im Wesentlichen senkrecht zu der ersten Achse in der Ebene des ersten Tischplattensegments (8) verläuft.

5. Tisch nach einem der Ansprüche 2 bis 4, **dadurch gekennzeichnet, dass** das erste Tischplattensegment (8) in einer oder mehreren definierten Nutzstellungen relativ zur Wand (1) fixierbar ist.

6. Tisch nach einem der Ansprüche 2 bis 5, **dadurch gekennzeichnet, dass** das zweite Tischplattensegment (9) in einer oder mehreren definierten Nutzstellungen relativ zum ersten Tischplattensegment (8) fixierbar ist.

7. Tisch nach einem der Ansprüche 2 bis 6, **dadurch gekennzeichnet, dass** das zweite Tischplattensegment (9) auf einer Seite eine Tischfläche und auf der gegenüberliegenden Seite einen Bildschirm (11) aufweist.

8. Tisch nach Anspruch 7, **dadurch gekennzeichnet, dass** der Bildschirm (11) wenigstens 50%, vorzugsweise wenigstens 60%, 70% 80% bzw. 90% der Gesamtfläche der gegenüberliegenden Seite des zweiten Tischplattensegments (9) einnimmt.

9. Tisch nach einem der Ansprüche 1 bis 8, **dadurch gekennzeichnet, dass** der Bildschirm (11) berührungsempfindliche Steuerelemente aufweist.

10. Tisch nach einem der Ansprüche 1 bis 9, **dadurch gekennzeichnet, dass** ein Orientierungssensor vorgesehen ist, der eine automatische Anpassung der Ausrichtung von Bildschirmdarstellungen abhängig von der Orientierung des Bildschirms (11) im Raum ermöglicht.

11. Anordnung aus einer Wand und einem an der Wand befestigten Tisch nach einem der Ansprüche 1 bis 10.

12. Anordnung nach Anspruch 11, **dadurch gekennzeichnet, dass** der Tisch in eine Staustellung bringbar ist, in der er im Wesentlichen parallel zu einer Wandfläche (1) angeordnet ist.

13. Anordnung nach Anspruch 12, **dadurch gekennzeichnet, dass** er in der Staustellung in einer in der Wand (1) vorgesehenen Vertiefung (2) angeordnet ist.

14. Anordnung nach Anspruch 12 oder 13, **dadurch gekennzeichnet, dass** die Tischplattensegmente (8, 9) des Tischs in der Staustellung aufeinander geklappt und im Wesentlichen parallel zueinander angeordnet sind.

15. Anordnung nach einem der Ansprüche 12 bis 14, **dadurch gekennzeichnet, dass** der Bildschirm (11) in der Staustellung von der Wand (1) weg weist.

## Claims

1. Table for attaching to the wall (1) of an aircraft or the like, with a table top comprising at least two table top segments (8, 9) which are moveable relative to each other:
a) at least one table top segment (9) having a screen (11) on one side;
b) two table top segments (8, 9) being pivotable or rotatable in relation to each other about at least two axes, with the first axis running parallel to an edge of a table top segment (8, 9) and the second axis running substantially perpendicularly to the first axis in the plane of a table top segment (9); **characterised in that** the two table top segments have two rotational degrees of freedom with respect to each other.

2. Table according to Claim 1, **characterised in that** a first table top segment (8) can be fastened moveably to the wall (1) and a second table top segment (9) is connected moveably to the first table top segment (8).

3. Table according to Claim 2, **characterised in that** the first table top segment (8) is pivotable in relation to the wall (1) about a first axis which runs parallel to that edge of the first table top segment (8) which faces the wall (1).

4. Table according to Claim 3, **characterised in that** the first table top segment (8) is additionally rotatable in relation to the wall (1) about a second axis which runs substantially perpendicularly to the first axis in the plane of the first table top segment (8).

5. Table according to one of Claims 2 to 4, **characterised in that** the first table top segment (8) can be fixed in one or more defined use positions relative to the wall (1).

6. Table according to one of Claims 2 to 5, **characterised in that** the second table top segment (9) can be fixed in one or more defined use positions relative to the first table top segment (8).

7. Table according to one of Claims 2 to 6, **characterised in that** the second table top segment (9) has a table surface on one side and a screen (11) on the opposite side.

8. Table according to Claim 7, **characterised in that** the screen (11) takes up at least 50%, preferably at least 60%, 70%, 80% or 90% of the entire surface of the opposite side of the second table top segment (9).

9. Table according to one of Claims 1 to 8, **characterised in that** the screen (11) has touch-sensitive control elements.

10. Table according to one of Claims 1 to 9, **characterised in that** an orientation sensor is provided which permits automatic adaptation of the alignment of onscreen displays as a function of the orientation of the screen (11) in space.

11. Arrangement comprising a wall and a table fastened to the wall according to one of Claims 1 to 10.

12. Arrangement according to Claim 11, **characterised in that** the table can be brought into a stowed position in which it is arranged substantially parallel to a wall surface (1).

13. Arrangement according to Claim 12, **characterised in that**, in the stowed position, it is arranged in a depression (2) provided in the wall (1).

14. Arrangement according to Claim 12 or 13, **characterised in that** the table top segments (8, 9) of the table are folded onto each other in the stowed position and are arranged substantially parallel to each other.

15. Arrangement according to one of Claims 12 to 14, **characterised in that**, in the stowed position, the screen (11) faces away from the wall (1).

## Revendications

1. Table destinée à être montée sur la paroi (1) d'un avion ou similaire, avec une plaque de table composée d'au moins deux segments de plaque de table (8, 9) mobiles l'un par rapport à l'autre,
a) au moins un segment de plaque de table (9) présentant un écran (11) sur un côté ;
b) deux segments de plaque de table (8, 9) pouvant pivoter ou tourner l'un contre l'autre autour d'au moins deux axes, le premier axe s'étendant parallèlement à une arête d'un segment de plaque de table (8, 9) et le second axe s'étendant sensiblement perpendiculairement au premier axe dans le plan d'un segment de plaque de table (9) ; **caractérisée en ce que** les deux segments de plaque de table présentent deux degrés de liberté rotatifs l'un par rapport à l'autre.

2. Table selon la revendication 1, **caractérisée en ce qu'**un premier segment de plaque de table (8) peut être fixé de manière mobile sur la paroi (1) et un second segment de plaque de table (9) est relié de manière mobile au premier segment de plaque de table (8).

3. Table selon la revendication 2, **caractérisée en ce que** le premier segment de plaque de table (8) peut pivoter autour d'un premier axe par rapport à la paroi (1), qui s'étend parallèlement à l'arête tournée vers la paroi (1) du premier segment de plaque de table (8).

4. Table selon la revendication 3, **caractérisée en ce que** le premier segment de plaque de table (8) peut tourner en outre autour d'un second axe par rapport à la paroi (1), qui s'étend sensiblement perpendiculairement au premier axe dans le plan du premier segment de plaque de table (8).

5. Table selon l'une quelconque des revendications 2 à 4, **caractérisée en ce que** le premier segment de plaque de table (8) peut être fixé dans une ou plusieurs positions utiles définies par rapport à la paroi (1).

6. Table selon l'une quelconque des revendications 2 à 5, **caractérisée en ce que** le second segment de plaque de table (9) peut être fixé dans une ou plusieurs positions utiles définies par rapport au premier segment de plaque de table (8).

7. Table selon l'une quelconque des revendications 2 à 6, **caractérisée en ce que** le second segment de plaque de table (9) présente d'un côté une surface de table et de l'autre côté un écran (11).

8. Table selon la revendication 7, **caractérisée en ce que** l'écran (11) occupe au moins 50 %, de préférence au moins 60, 70, 80 ou 90 % de la surface totale du côté opposé du second segment de plaque de table (9).

9. Table selon l'une quelconque des revendications 1 à 8, **caractérisée en ce que** l'écran (11) présente des éléments de commande tactiles.

10. Table selon l'une quelconque des revendications 1 à 9, **caractérisée en ce qu'**un capteur d'orientation est prévu, lequel permet une adaptation automatique de l'orientation de représentations d'écran en fonction de l'orientation de l'écran (11) dans l'espace.

11. Agencement d'une paroi et d'une table fixée sur la paroi selon l'une quelconque des revendications 1 à 10.

12. Agencement selon la revendication 11, **caractérisé en ce que** la table peut être amenée dans une position de rangement, dans laquelle elle est disposée sensiblement parallèlement à une surface de paroi (1).

13. Agencement selon la revendication 12, **caractérisé en ce qu'**elle est disposée dans la position de rangement dans une cavité (2) prévue dans la paroi (1).

14. Agencement selon la revendication 12 ou 13, **caractérisé en ce que** les segments de plaque de table (8, 9) de la table dans la position de rangement sont rabattus l'un sur l'autre et sont disposés sensiblement parallèlement l'un à l'autre.

15. Agencement selon l'une quelconque des revendications 12 à 14, **caractérisé en ce que** l'écran (11) est éloigné de la paroi (1) dans la position de rangement.
